# EUROPEAN PATENT SPECIFICATION

(11) **EP 0 675 919 B1**
(45) Date of publication and mention of the grant of the patent: **23.06.1999**
(21) Application number: 94905529.7
(22) Date of filing: 28.12.1993
(51) Int. Cl.: C08K 5/3492, C08K 5/20, C08K 5/103, C08L 77/00

(54) **FIRE-RESISTANT POLYAMIDE RESIN COMPOSITION**
FEUERBESTÄNDIGE POLYAMIDHARZZUSAMMENSETZUNG
COMPOSITION DE RESINE DE POLYAMIDE RESISTANT AU FEU

(30) Priority: 28.12.1992 JP 34791192; 30.03.1993 JP 7156693
(43) Date of publication of application: 11.10.1995
(73) Proprietor: E.I. DU PONT DE NEMOURS AND COMPANY, Wilmington Delaware 19898 (US)
(72) Inventor: NOZAKI, Masahiro, Vienna, WV 26105-1264 (US)
(74) Representative: Abitz, Walter, Dr.-Ing.
(86) International application number: US9312594
(87) International publication number: WO9414884

(56) References cited:
- EP-A- 0 017 925
- EP-A- 0 418 210
- DE-A- 2 740 092
- JP-A- 59 140 268
- JP-A- 62 054 736
- JP-A- 62 257 943
- US-A- 2 948 698
- US-A- 3 361 701
- US-A- 4 321 189
- US-A- 4 511 684
- US-A- 4 749 736

## Description

### BACKGROUND OF THE INVENTION

The present invention pertains to a fire-resistant polyamide composition that shows improved molding fluidity and superior tensile modulus and Izod impact strength.

Polyamide resins are used in a variety of fields, such as electrical and electronic parts, etc., due to their superior mechanical properties. electrical properties, chemical resistance, etc. However, since superior fire resistance is needed in certain fields, research is being performed in order to obtain polyamide resins with superior fire resistance when compared to conventional resins. Moreover, methods whereby a variety of flame retarders, such as halogen compounds, phosphorous compounds, etc., are mixed in order to obtain fire-resistant polyamide resin compositions have been used in the past. In particular, polyamide resin compositions in which melamine cyanurate has been added as the flame retarder are known to provide molded articles that show no generation of toxic components with pyrolysis [Japanese Kokai Patent No. Sho 53(1978)-31759].

Moreover, research is also being performed on improvement of molding fluidity of fire-resistant polyamide resin compositions in order to obtain molded articles of complex shapes, as well as molded articles having thin walls. Although polyamide resins with a low molecular weight, i.e., a low viscosity, can be used to improve molding fluidity, the superior mechanical properties of the polyamide resin itself cannot be retained when polyamide resins with a low molecular weight are used. Therefore. fire-resistant polyamide resin compositions to which bisamides and stearic acid stearates have been added are being developed in order to retain mechanical properties while improving fluidity [Japanese Patents No. Sho 56(1981)-21065 and No. Hei 1(1989)-38820]. Nevertheless, molding conditions are restrictive and it is difficult to obtain good molded articles under a wide range of molding conditions with these fire-resistant polyamide resin compositions containing bisamides and stearic acid stearates. Consequently, there is a demand for further improvement of molding fluidity of fire-resistant polyamide resin compositions.

In light of the aforementioned circumstances, the purpose of this invention is to present a fire-resistant polyamide resin composition with improved molding fluidity. As a result, molded articles of a complex shapes and thin molded articles having superior tensile modulus and Izod impact strength can be obtained under a wide range of molding conditions.

### SUMMARY OF THE INVENTION

This invention relates to a fire-resistant polyamide resin composition comprising polyamide resin, 3 to 30 wt% melamine cyanurate and 0.02 to 1 wt% of at least one amide compound represented by the following formula. 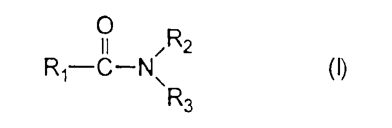 wherein R₁ is an aliphatic hydrocarbon and R₂ and R₃ are hydrogen or an aliphatic hydrocarbon.

Furthermore, this invention relates to a fire-resistant polyamide resin composition comprising polyamide resin, 3 to 30 wt% melamine cyanurate. and a total of 0.02 to 1 wt% of at least one amide compound represented by the aforementioned formula (I) and at least one fatty acid glyceride compound represented by formula (II): 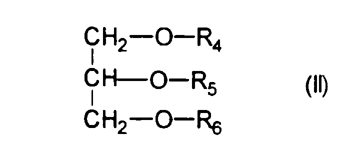 wherein at least one of R₄, R₅ and R₆ is an aliphatic carbonyl group and the others are hydrogen or an aliphatic carbonyl group.

### DETAILED DESCRIPTION OF THE INVENTION

Examples of polyamide resins which may be used in this invention include copolymers obtained by polycondensation of a diamine, such as hexamethylene diamine, etc., and a dicarboxylic acid, such a terephthalic acid, isophthalic acid, adipic acid, etc.. and polymers and copolymers of ε-caprolactam, aminocaproic acid, enantholactam, 7-aminoheptanoic acid, pyrrolidone, etc.

The melamine cyanurate used in this invention is an equimolar reaction product of cyanuric acid and melamine and can be obtained by, for instance, mixing an aqueous solution of cyanuric acid and an aqueous solution of melamine and reacting the mixture while it is being stirred at a temperature of 90 to 100°C, after which the precipitate that is produced is filtered. The melamine cyanurate is generally a white solid. It should be used as a micropowder. Commercial powder can be used as is or after being crushed. Additionally, some of the amino groups or hydroxyl groups of the melamine cyanurate used in this invention can be substituted with other substituents. A compound substituted in this way can be used in this invention as long as it is a melamine cyanurate.

In this invention there should be 3 to 30 wt% of the melamine cyanurate. When less than this amount is used, fire-proofing effects cannot be expected, while when more than this amount is used, detrimental and undesirable effects on mechanical properties are noticed.

The amide compound used in this invention should be at least one selected from those shown in the aforementioned general formula (1). Examples include lauryl amide, stearyl amide, behenyl amide, N,N-diethyl stearyl amide. N,N-diethyl behenyl amide, etc.

The fatty acid glyceride compound used in this invention should be one or two or more selected from those shown by aforementioned general formula (II). Examples include monoesters, diesters, or triesters of saturated or unsaturated fatty acids, such as behenic acid. stearic acid. lauric acid, erucic acid, etc., of glycerin. Fatty acid glyceride compounds with 10 or more carbons are preferred.

Although the amide compounds can be used alone, it is preferred that they be used together with the (fatty acid glyceride compounds).

The amount of these amide compounds and fatty acid glyceride compounds added is 0.02 to 1 wt%, preferably 0.05 to 0.5 wt%. whether the amide compounds are used alone or together with the fatty acid glycerine compounds. When less than this amount is used, improvement of molding fluidity of the resin composition cannot be expected, while when more than this amount is used, mold deposition plate out readily occur. Additionally, when the amount of these amide compounds and fatty acid glyceride compounds exceeds the specified upper limit, problems with injection molding and molded article quality are observed.

The fire-resistant polyamide resin composition of this invention retains sufficient fire resistance, while showing improved molding fluidity. due to the multiplied effects of the aforementioned melamine cyanurate and amide compound and optionally fatty acid glyceride compound. That is, this invention provides a resin composition that shows reduced melt viscosity and improved molding fluidity because a polyamide resin with a low molecular weight is not used and because the composition contains an amide compound and optionally fatty acid glyceride compound. Consequently, when the fire-resistant resin composition of this invention is used, thermal stability can be improved because generation of heat with shearing during injection molding is inhibited. Moreover, the formation of silver on the surface of the injection molded article is thereby prevented and as a result, molded articles with a good appearance can be obtained under a wide range of molding conditions.

By means of this invention, molding fluidity of the resin composition can be improved without using a polyamide resin with a low molecular weight and therefore, the properties of the polyamide resin itself can be retained while improving thermal stability and inhibiting thermal degradation of the resin. As a result, tensile modulus and Izod impact strength are improved when compared to conventional molded articles to which bisamides and stearic acid stearates have been added. Consequently, the fire-resistant polyamide resin composition of this invention is preferred for uses such as electrical and electronic parts, etc.

There are no special restrictions to the method by which the composition of this invention is obtained. Useful methods include methods whereby each component is dry blended together, methods whereby after the melamine cyanurate and amide compound and/or fatty acid glyceride compound have been premixed, polyamide resin is added to this mixture, etc.

Additionally, the composition of this invention can also contain conventional additives, such as dyes, pigments, fillers, antistatics, inorganic reinforcers, etc., as long as it is within a range that does not preclude attainment of the aforementioned purpose.

### EXAMPLES

This invention is further illustrated by the examples below. This invention, however is not limited to the examples.

### Examples 1 Through 5 and Comparative Examples 1 Through 4

Melamine cyanurate (Mitsubishi Yuka; MCA C-0) and the amide compounds and optionally fatty acid glyceride compounds shown in Table 1 were mixed with nylon 66 pellets (DuPont; Zytel® 101) with the relative viscosity (formic acid method) shown in Table 1. The additives that were used were N-stearyl erucamide (C₂₁H₄₃CONHC₁₈H₃₇), ethylene bisstearylamide (C₁₇H₃₆CONHCH₂CH₂NHCOC₁₇H₃₅) and stearyl stearate (C₁₇H₃₅COOC₁₈H₃₇). The melting temperature at a resin temperature of 285°C was determined for each mixture using a rheometer made by Kaines.

Pellets were then prepared. Tensile test pieces, impact test pieces and UL94 burning test pieces were molded using these pellets. Tensile tests, impact tests and burning tests were performed using these pieces. Moreover, retention time until silver formed was determined on a plate measuring 76.2 x 127 x 3.2 mm at a resin temperature of 285°C. The test methods used were as follows:

| | |
|---|---|
| Tensile test (tensile modulus) | ASTM D638 |
| Impact test (Izod impact strength) | ASTM D256 |
| Burning test (using test piece with thickness of 1/32 inch [approximately 0.8 mm] | UL 94 |

The test results are shown in Table 1.

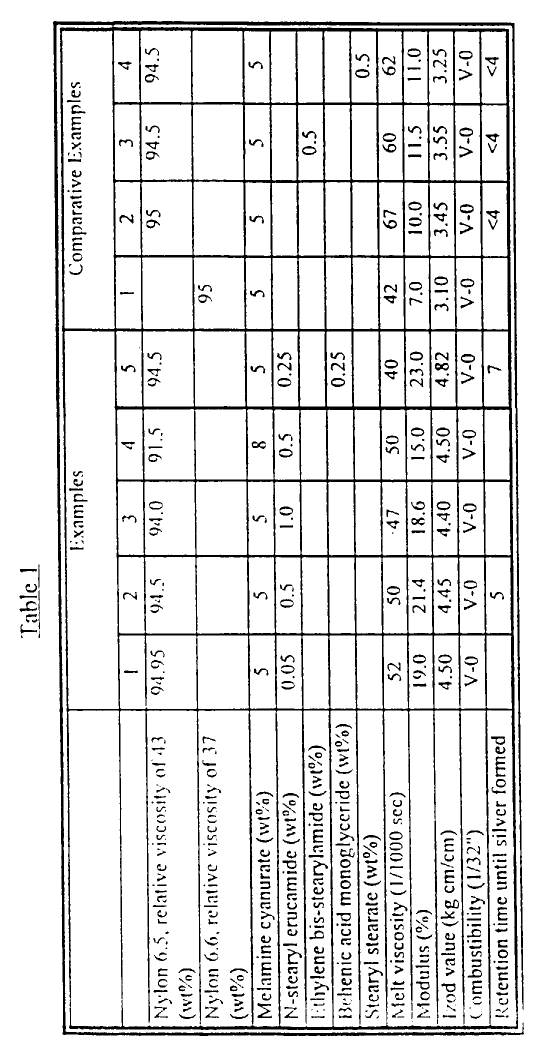

In Examples 1 through 5 of this invention, melt viscosity was lower and tensile modulus was improved by approximately two-fold while Izod impact was improved by 1.2-fold or more as compared to the compositions in Comparative Examples 1 through 4.

## Claims

1. A fire-resistant polyamide resin composition comprising polyamide resin, 3 to 30 wt% melamine cyanurate, and 0.02 to 1 wt% of at least one amide compound represented by the following formula: 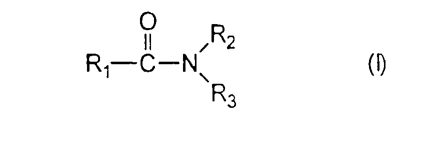 wherein R₁ is an aliphatic hydrocarbon and R₂ and R₃ are hydrogen or an aliphatic hydrocarbon.

2. A fire-resistant polyamide resin composition comprising polyamide resin, 3 to 30 wt% melamine cyanurate, and a total of 0.02 to 1 wt% of at least one amide compound represented by the following formula (I): 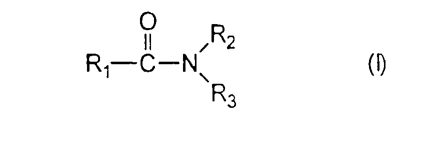 wherein, R₁ is an aliphatic hydrocarbon and R₂ and R₃ are hydrogen or an aliphatic hydrocarbon, and at least one fatty acid glyceride compound represented by the following formula (II): 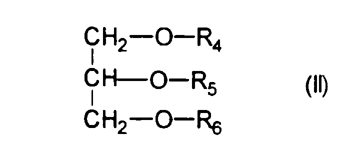 wherein at least one of R₄, R₅ and R₆ is an aliphatic carbonyl group and the others are hydrogen or an aliphatic carbonyl group.

## Patentansprüche

1. Feuerbeständige Polyamidharzzusammensetzung, umfassend Polyamidharz, 3 bis 30 Gew.-% Melamincyanurat und 0,02 bis 1 Gew.-% wenigstens einer Amidverbindung der folgenden Formel: 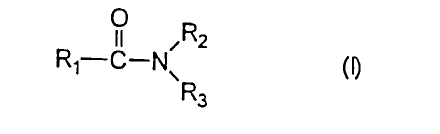 in welcher R₁ ein aliphatischer Kohlenwasserstoff und R₂ und R₃ Wasserstoff oder einen aliphatischen Kohlenwasserstoff bedeuten.

2. Feuerbeständige Polyamidharzzusammensetzung, umfassend Polyamidharz, 3 bis 30 Gew.-% Melamincyanurat und insgesamt 0,02 bis 1 Gew.-% wenigstens einer Amidverbindung der folgenden Formel (I): 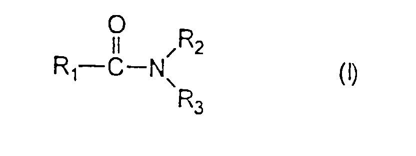 in welcher R₁ ein aliphatischer Kohlenwasserstoff und R₂ und R₃ Wasserstoff oder einen aliphatischen Kohlenwasserstoff bedeuten, und wenigstens einer Fettsäureglyceridverbindung der folgenden Formel (II): 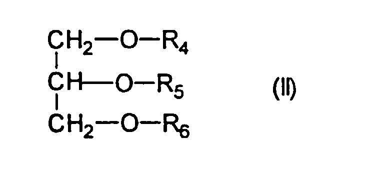 in welcher wenigstens eines von R₄, R₅ und R₆ eine aliphatische Carbonylgruppe ist und die anderen Wasserstoff oder eine aliphatische Carbonylgruppe bedeuten.

## Revendications

1. Composition de résine polyamide résistante au feu, comprenant de la résine polyamide, 3 à 30% en poids de cyanurate de mélamine et 0,02 à 1% en poids d'au moins un composé amide représenté par la formule suivante: 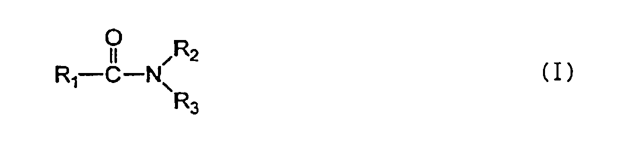 dans laquelle R₁ est un hydrocarbure aliphatique et R₂ et R₃ sont de l'hydrogène ou un hydrocarbure aliphatique.

2. Composition de résine polyamide résistante au feu, comprenant de la résine polyamide, 3 à 30% en poids de cyanurate de mélamine, et un total de 0,02 à 1% en poids d'au moins un composé amide représenté par la formule (I) suivante: 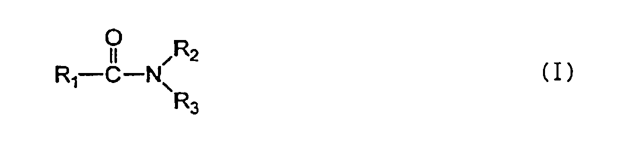 dans laquelle R₁ est un hydrocarbure aliphatique et R₂ et R₃ sont de l'hydrogène ou un hydrocarbure aliphatique, et au moins un composé glycéride d'acide gras représenté par la formule (II) suivante: 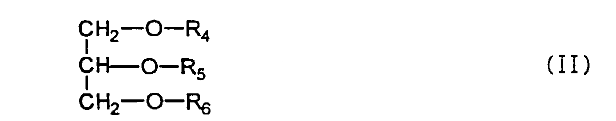 dans laquelle au moins l'un parmi R₄, R₅ et R₆ est un groupe carbonyle aliphatique et les autres sont de l'hydrogène ou un groupe carbonyle aliphatique.
